# EUROPEAN PATENT SPECIFICATION

(11) **EP 2 545 239 B1**
(45) Date of publication and mention of the grant of the patent: **14.01.2015**
(21) Application number: 11707906.1
(22) Date of filing: 04.03.2011
(51) Int. Cl.: E06B 3/22, E06B 5/16, E04B 1/62, C04B 28/00, C04B 28/26

(54) **Fire resistant geopolymer foam filling for a window or door frame**
Feuerfeste Geoploymer-Schaumfüllung für einen Fenster- oder Türrahmen
Remplissage coupe-feu en mousse géopolymère pour un cadre de fenêtre ou porte

(30) Priority: 08.03.2010 GB 201003804
(43) Date of publication of application: 16.01.2013
(73) Proprietor: Alsitek Limited, Peterborough Cambridgeshire PE1 1SA (GB)
(72) Inventor: REID, Michael, Cambridgeshire PE1 3PA (GB)
(74) Representative: Radkov, Stoyan Atanassov
(86) International application number: PCT/GB2011/050431
(87) International publication number: WO 2011/110834

(56) References cited:
- WO-A2-02/24596
- DE-U1- 8 510 302

## Description

The present invention relates in particular to window or door frames for buildings. It may however also have wider applications and relate to other building elements, for example to doors, door panels, and other architectural extrusions.

Most windows, and some doors, of modem houses are made using a thermoplastic, usually uPVC, extruded hollow profile structure as a frame which holds glazing or a door. Alternatively the frames may be made from extruded aluminium or more traditionally wood although such window and door frames are generally more costly, and so uPVC windows are widely used. A problem, in particular with uPVC windows and door frames, is that in the event of a fire in the building, the PVC can soften and melt, allowing the glass to fall out and allow air to enter the building. This inrush of air provides oxygen to the burning materials in the house and accelerates the rate of combustion. This may also apply to window and door frames made form other materials. Another problem associated with uPVC extruded window profiles is the toxicity of the evolved gasses in a fire.

More generally such window and door frames must also increasingly have good thermal insulation properties to reduce thermal losses through the frame, and must also have sufficient structural strength to support the window or door within the building. It is also important that the frames have an acceptable appearance because they are usually on show and a key part of the building's appearance, and also the external facing parts have suitable weather resistance, ideally requiring minimal maintenance.

To improve the thermal insulation properties of such window frames it has been proposed to fill the extruded hollow window profiles with a foam or other material. For example DE29813143 describes filling such hollow profiles with a high resistance polyurethane foam, and DE2926487 describes using combination polyurethane foam and mineral filler. EP0560193 describes filing the profiles with specifically mineral or plastic granules. To provide a fire resistant building structure DE3224001 describes using a hollow metal profile and casting within this a resin bonded mineral filling of for example microglass spheres with the optional addition of further fire resistant additive chemicals. Such arrangements may however still give off toxic fumes, in particular from the plastic or resin filling materials. Furthermore such plastic materials, resins, and chemical additives may be environmentally unfriendly and also in such a composite structure make end of life recycling more difficult.

It has also been proposed, for example in FR2651270, to produce fireproof window or door frames cast from a geopolymer type material. It has also been more recently proposed for example in WO2009/050472, to produce an extruded geopolymer window or door frame. DE3512588 describes using plastics hollow window profile with a particular geopolymer foam material.

It has been proposed to use geopolymer materials to form other parts of buildings. For example DE4337193 describes forming exterior walls and floors from geopolymer foam within a solid geopolymer structural frame. DE4332531 describes forming a walling element with comprising a concrete hollow structure filled with a geopolymer material. DE4333290 describes forming another wall structure, in particular for a wet room from a geopolymer. DE4332528 describes forming a roller blind casing from a geopolymer material.

A geopolymer is a material formed from non-organic mineral compounds bonded in a manner akin to organic chemical derived polymers. One example of a geopolymer material is formed by dissolution of calcined kaolin in an alkali. Geopolymer materials are known in the art and are for example described further in a paper by Davidovits J et al: "Geopolymer: Room Temperature Ceramic Matrix for Composites", Ceramic Engineering and Science Proceedings, Columbus, US vol.9, no. 7/08 1 July 1988 pages 835 to 842. Geopolymers have a number of advantages and in particular are generally more environmentally friendly as compared to traditional polymers.

Such proposals to use geopolymer materials in particular for building products and window or door frames have a number of advantages. For example such geopolymer materials and so frames formed from them are resistant to fire, do not give off toxic combustion products and are relatively cheap. They have not however to date been widely adopted, and in particular have not been commercially adopted for forming window or door frames. In particular it has been found that there is generally a technical prejudice against using such relatively new and unconventional materials especially for more aesthetic parts of a building for example window and door frames. In addition it has been found that geopolymer materials, being mineral based tend to be relatively brittle, and so are susceptible to damage. They also have a relatively poor surface finish and there are problems in achieving the described colour and finish required in particular for forming window and door frames completely from geopolymer materials. In addition a number of previously proposed geopolymer materials may not be suitable for use in window or door frames, and in particular fireproof frames. For example one of the foam geopolymer materials described by Joseph Davidovits in his book "Geopolymer Chemistry & Applications" (Institut Géopolymère (Geopolymer Institute), Saint-Quentin, France, ISBN 2-951-14820-1-9) contains calcium fluoride. Calcium fluoride is a very effective conductor of heat and would render that foam ineffectual as a thermal insulator. Another of the materials previously proposed and described contains Portland cement and as such would only be fire resistant at low temperatures. MX200801541 describes forming a fire door from a solid cementaceous material. Such a solid material is relatively dense and heavy which is undesirable and increases transport costs. A cementaceous material is also as described less resistant to fire and less thermally insulative. The specific foam material described in DE3512588 also requires curing within the plastic window profile at an elevated temperature of between 60 and 120°C. This is undesirable since it may adversely affect the plastic profile, and increases the energy costs associated with producing the window frames.

Other materials and building elements are disclosed in WO 02/24596 A2 and DE 8510302 U1.

It is therefore desirable to provide an improved building element, and in particular a window or door frame, which addresses the above described problems and/or which more generally offers improvements or an alternative to existing arrangements. In particular it is desirable to provide an improved fire resistant window or door frame, and yet more specifically to provide an improved geopolymer based window or door frame which address the above identified described problems.

According to the present invention there is therefore provided a building element structure, in particular a window or door frame, as described in the accompanying claims. There is also provided a geopolymer material for use in a building structure, and a method of making a building structure.

In an embodiment of the invention there is provided a building element structure comprising a hollow shell formed from a first material defining at least one internal chamber filled with a geopolymer material. The geopolymer material is formed from a mixture of aluminosilicate metakaolin, mixed with mica and/or graphite (or other lamellar material), and an aqueous alkali metal silicate solution comprising an alkali metal hydroxide solution. The curable mixture comprises by weight as compared to 3 parts of the aluminosilicate metakaolin the following ratios of constituents:
from at least 1 up to 5 parts of Mica and/or graphite;
from 0 up to 4 parts of an alkali metal silicate, and/or from 0 up to 2 parts of silica;
from at least 0.2 up to 3 parts of an alkali metal hydroxide and/or oxide; and
from at least 1 up to 6 parts of water.

This material has been found to be particularly advantageous in both terms of fire resistance, strength and curing time.

The alkali metal is preferably potassium and/or sodium. The alkali metal silicate is potassium and/or sodium. The alkali metal hydroxide is potassium and/or sodium hydroxide.

Preferably the geopolymer material is a foam material, and may be formed by adding a blowing agent prior to filling the at least one chamber. More preferably the blowing agent may comprise from 0.1 to 0.6 parts of 100Vol hydrogen peroxide which is added and blended with 8 parts of the mixture prior to filling the at least one chamber.

The geopolymer material, which is preferably a geopolymer foam material, advantageously provides strength and improved fire resistance to the structure, while the shell, which is typically an extruded polymer plastic material for example uPVC, protects the mineral foam materials and provides an acceptable surface finish and appearance. Moreover it has been found that this particular geopolymer material cures within the at least one chamber at generally room temperatures, and provides excellent fire and resistance properties.

The building element structure preferably comprises a plurality of chambers, and preferably only some of the chambers are filled with the geopolymer material. This reduces the quantity of geopolymer used and weight of the structure. Alternatively substantially the entire structure may be filled with the geopolymer material.

At least one internal chamber is filled with the geopolymer material, which preferably extends substantially around the structure to provide structural integrity to the structure.

The building element structure may comprise a hollow shell profile structure, and more preferably comprises an extruded profile structure.

The building element structure preferably comprises a plurality of hollow shell sections having at least one cavity and which are joined together to form the building element structure.

In particular the invention provides a window or door frame comprising an extruded plastic hollow defining at least one internal chamber extending substantially around the entire periphery of the frame and filled with a geopolymer foam material. A geopolymer foam material provides a fireproof filling for the voids in the PVC extrusion and therefore considerably increases the time that a fire in a building can burn before the frame fails and the glass falls out. The geopolymer foam does not evolve toxic gasses during a fire and that effect along with the glass retention significantly improves the chances of survival of people that are in the building when the fire starts as well as limiting the extent of the fire within buildings especially those with multiple floors. Advantageously, window frames filled with the geopolymer foam will transmit heat less from the inside of the building to the outside and thus reduce the heating energy required by the building in winter months and cooling in the summer. The frames are also relatively inexpensive both in material and manufacturing cost.

The present invention will now be described by way of example only with reference to the following figures in which:
Figure 1 is a front illustration of a window frame of an embodiment of the present invention;
Figure 2 is a cross sectional view through the window frame of figure 1 taken along line II.

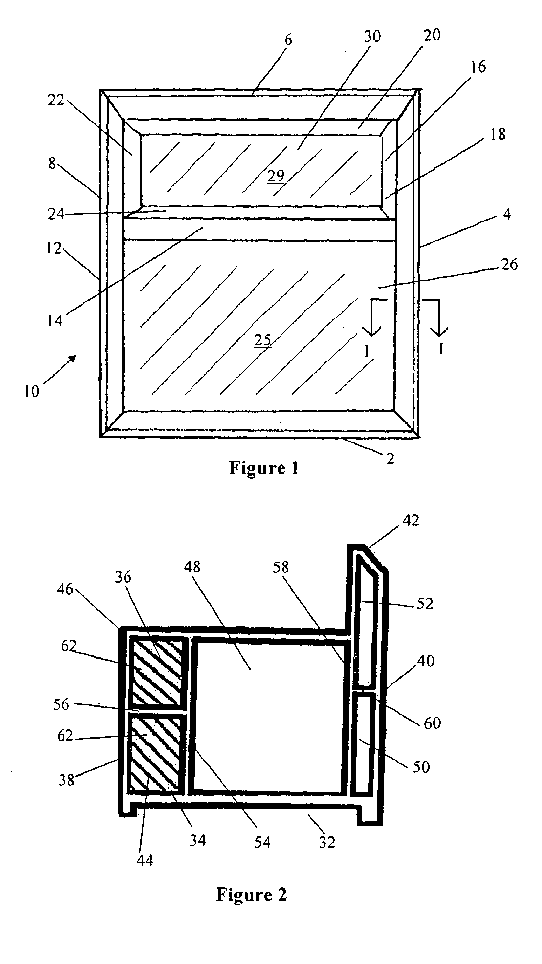

Referring to figure 1 a window 10 comprises a peripheral window frame 12 formed from four sections 2,4,6,8 which are joined together. The window 10 may also include one or more cross frame sections 14 extending between the other sections 2,4,6,8, and dividing the window 10 into separate openings 25,29. A further inner window frame 16 similarly formed from four sections 18,20,22,24 may also be fitted within the window frame 10, and preferably hingedly attached so as to pivot and open relative to the remainder of the window 10. Each of the sections 2,4,6,8 and 18,20,22,24 forming the window frame 12,16 comprises a profile section having a groove 32 around an outer periphery. Glass window panes 36,30 are fitted and held around their peripheral edges by suitable retaining arrangement as are known in the art, and against lip wall 42 by beading element (not shown) spaced from and parallel to the lip wall 42 which are suitably held in place within the frame 12, and in the openings 25,29 defined by the window frame 12 and inner window frame 16. As such the window is generally conventional.

The profile sections 2,4,6,8 and 18,20,22,24 are similar hollow elongate structures having outer walls 34,36,38,40 defining an outer shell 42. When installed an exposed front outer wall 40 faces outside when the window 10 is fitted into a building, and an exposed rear wall 38 faces toward the inside of the building. An outer side wall 43 abuts against the building window opening and wall (not shown) into which the window frame 12 is fitted and the other inner side wall 36 includes the groove 32 and abuts against the window sealed double glazed unit 26. The sections 2,4,6,8 are preferably formed by extrusion. The sections 2,4,6,8 are joined together at their ends by suitable mitre joints, although they can be connected in other ways for example by means of corner blocks into which they fit. The sections 2,4,6,8 are preferably formed from extruded plastic, more specifically uPVC. As shown in figure 2 the hollow sections 2,4,6,8 are preferably sub-divided into multiple separate chambers 44,46,48,50,52 by integral internal dividing walls 54,56,58,60. These internal walls 54,56,58,60 strengthen the sections 2,4,6,8, and improve the rigidity of the sections 2,4,6,8, while being substantially hollow the sections are relatively light.

In accordance with the invention the hollow profile sections 2,4,6,8 of the window frame, are at least partially filled along their length with geopolymer foam. More specifically as shown in figure 2 in this embodiment the two chambers 46 and 48 adjacent the rear wall 38 and nearest the inside of the building when the window frame 12 is fitted, are filled with geopolymer material 62. Corresponding chambers in all the other sections 2,4,6,8 are filled with the geopolymer foam material such that the geopolymer material substantially extends around the entire window frame 12. Preferably the chambers 46,48 are interconnected. The remaining chambers 48,50,52 are empty and unfilled. This reduces the weight of the frame 12 and also reduces the amount of geopolymer material used so reducing costs. In other embodiments, and to provide further strength additional chambers 48,50,52, and indeed even the whole hollow section 2,4,6,8 could be filled with geopolymer material. Similarly the inner window frame 16 and similar hollow sections 18,20,22,24 are at least partially filled with a geopolymer foam material.

Preferably geopolymer foam material is injected as a reagent liquid under pressure into the hollow profile sections though suitable drilled holes, where it foams and expands to fill the space. The geopolymer foam is then cured and sets. In other embodiments the geopolymer reagents may be poured into the hollow sections and then foamed in place. In the preferred embodiments the sections 2,4,6,8 are filled with the geopolymer foam once they have been assembled together into the frame 12, but before they are installed and the glass fitted. In other embodiments however the sections 2,4,6,8 may be filled with the geopolymer foam prior to being cut to length and joined together into the frame structure 12,16. Preferably at least the geopolymer filled chambers 46,48 are connected together. This makes filling easier since the frame 12,16 can be filled from a single injection point. In addition it ensures that a continuous peripheral structure of geopolymer foam material encircles the frame 12,16. The geopolymer foam material acts a structural core for the window frame 12,16.

The geopolymer foam material is a mineral foam material, and in particular a synthetic aluminosilicate material, as described further below. The geopolymer foam is formed by reaction of an aluminosilicate powder with an alkaline silicate solution. Preferably in these embodiments the geopolymer material is a calcined aluminosilicate kaolin based geopolymer which is mixed and reacted with an alkali. A filler, for example mica, is then added and mixed in followed by adding and mixing with a blowing or foaming agent, for example hydrogen peroxide before they are then injected. Such geopolymer materials are environmentally friendly (as compared to plastic materials) and also importantly are fire resistant, and are good thermal insulators. They are also easy to injection mould and are relatively cheap to manufacture and handle. The geopolymer foam material is described in more detail below.

In addition, and as also known additional reinforcement, for example cellulosic or aramid reinforcing fibres could be mixed into the geopolymer material filling to chambers to provide further strength. In other embodiments a non-foamed geopolymer material, for example omitting the blowing agent, could be used. This is however less preferred as it will increase the weight and amount of geopolymer material and also has been found to have poorer thermal properties although does have improved strength.

In the event of a fire in the building, the thin wall 38 of uPVC on the room-side of window frame 12, will quickly burn away exposing the surface of the geopolymer foam 62 within the chambers 46,48. The geopolymer foam 62 will not burn or soften in the heat of the fire. The geopolymer foam 62 is also good thermal insulator and will maintain the uPVC walls 54, 34,36, on the outside of the geopolymer foam 62 in the solid state and prevent them from burning by reducing the rate of heat transfer. As a result the geopolymer foam 62 maintains the structural integrity of the window frame 12 such that the glass pane 25 does not fall out. As shown in this embodiment the chambers 44,46 nearest the room and internal face of the window frame 12 that would be facing into the building are specifically filled with the geopolymer materials 62 to provide suitable fire resistance and provide a substantially solid barrier of geopolymer material 62. This protects the remainder of the window frame 12 from any fire which is likely to originate inside the building and so on the internal side of the window frame. The other chambers can however additionally be filed to further improve the fire resistance, although increasing cost and weight. In particular geopolymer foam can be provided in the chambers around any additional steel members (not shown) that may be included in the window frame 12, or other vulnerable areas of the window frame 12. This geopolymer foam around such steel members reduces the strain of the members in the event of the fire and thus keeps the window more stable for longer, and/or protects any such vulnerable areas.

The geopolymer foam 62 and foam filed chambers 44,46 also reduce the thermal conductivity of the frame 12 and the noise conduction through the frame 12. As a result it may be advantageous to fill the further chambers to further reduce the thermal conductivity of the frame 12.

In addition the geopolymer material 62 filled chambers 46,48 strengthen and improve the rigidity of the window frame 12,16 more generally. As a result the uPVC walls 34,36,38,40 can be made thinner reducing plastic materials. In optimised designs the chambers 44,46,48,50,52 may also be configured and dimensioned to maximise the additional strength provided by the geopolymer material 62 filing and thermal resistance. By filling more chambers the strength and rigidity is further increased although again adding additional weight and material and so cost.

In the preferred arrangement only some of the chambers, nearest the inside of the room and/or around vulnerable areas are filled with geopolymer foam material 62, with other chambers being left unfilled and hollow to reduce weight, material and material costs.

Advantageously the window frame 12 with its external uPVC walls 34,36,38,40 surrounding the geopolymer foam core material 62 has the same appearance as a conventional window frame. The uPVC walls have the same required high quality finish can be easily coloured and also have the required weather resistance. The uPVC walls also effectively protect the geopolymer material 62 within the window frame 12.

More specifically the geopolymer foam material 62 is formed from a mixture of aluminosilicate metakaolin, mixed with mica and/or graphite (or other lamellar material), and an alkali metal silicate solution. The silicate solution comprises an alkali metal silicate comprising a mixture of an alkali metal silicate, an alkali metal hydroxide, and water. The mixture comprises potassium silicate and/or sodium silicate, potassium hydroxide and/or sodium hydroxide, and water. It has also been found that particular ranges of the amounts of these constituents produce a geopolymer material 62 having particular benefits in particular for this specific application. In particular it has been found that an improved geopolymer material particularly suited for this application is formed from a mixture having by weight as compared to 3 parts by weight of the aluminosilicate metakaolin the following ratios:
from at least 1 up to 5 parts of Mica and/or graphite, and preferably 2.5 to 3.5 parts of Mica;
from 0 up to 4 parts of an alkali metal silicate, which is potassium or sodium silicate, and/or from 0 to 2 parts silica, which is from 1 up to 2 parts of potassium silicate or from 0.5 up to 1.5 parts of sodium silicate;
from at least 0.2 up to 3 parts of an alkali metal hydroxide and/or oxide, which is potassium or sodium hydroxide, and preferably from 0.5 up to 1.5 parts of sodium or potassium hydroxide; and
from at least 1 up to 6 parts, and preferably from at least 4 to 5 parts, of water.

When in an embodiment, not belonging to the present invention, a mixture of Mica and graphite is used the mixture preferably has by weight as compared to 4 parts by weight of the aluminosilicate metakaolin from 0.5 up to 1.5 parts Mica and from 0.5 up to 1.5 part of graphite.

In particularly preferred and advantageous variations the mixture comprises and preferably consists of by weight as compared to 3 parts of aluminosilicate metakaolin the following ratios of constituents: from at least 2.5 up to 3.5 parts of Mica; from at least 1 up to 2 parts of potassium silicate; from at least 0.5 up to 1.5 parts of potassium hydroxide; and from at least 4 up to 5 parts of water.

In other preferred and advantageous variations the mixture comprises and preferably consists of by weight as compared to 3 parts of aluminosilicate metakaolin the following ratios of constituents: from at least 2.5 up to 3.5 parts of Mica; from at least 0.5 up to 1.5 parts of sodium silicate; from at least 0.5 up to 1.5 parts of sodium hydroxide; and from at least 4 up to 5 parts of water.

In yet other preferred variations, not belonging to the present invention, the mixture comprises and preferably consists of by weight as compared to 4 parts of aluminosilicate metakaolin the following ratios of constituents: from at least 0.5 up to 1.5 parts of Mica, and from at least 0.5 up to 1.5 parts graphite; from at least 1 up to 2 parts of potassium silicate; from at least 0.5 up to 1.5 parts of potassium hydroxide; and from at least 4 up to 5 parts of water.

Advantageously in other variations, not belonging to the present invention, the mixture comprises and preferably consists of by weight as compared to 4 parts of aluminosilicate metakaolin the following ratios of constituents: from at least 0.5 up to 1.5 parts of Mica and form at least 0.5 up to 1.5 parts graphite; from at least 0.5 up to 1.5 parts of sodium silicate; from at least 0.5 up to 1.5 parts of sodium hydroxide; and from at least 4 up to 5 parts of water.

In all these cases there may also be other contaminants or trace elements. The alkali metal may also include other co-metal ions for example aluminium, with for example the alkali metal silicate comprising lithium aluminium silicate.

These materials are mixed together to form the base geopolymer material and when fully blended hydrogen peroxide, preferably from at least 0.1 to 0.6 parts with 8 parts of the mixture of 100Vol hydrogen peroxide, is added as a blowing agent. The resulting mixture is injected into one or more chambers 44,46 of a window or door frame 12 as described above.

Preferably the constituents of the geopolymer material 62 are produced from and by the mixture of two stable components with then the addition of the blowing agent. The first component comprises a liquid component comprising the silicate solution, and the second component comprises a solid component including the aluminosilicate metakaolin, and mica and/or graphite. Each of these two components are stable and can be stored for over 6 months without harming the performance of the resulting foam. The two components can be pre-prepared and shipped to the point of use of the foam. To produce the foam 62, the two components are mixed with a ratio of 1:1 to produce a paste at a temperature between 20 and 30 degrees Celsius. To the paste is added the 100 vol hydrogen peroxide solution which has to be very thoroughly mixed into the paste. The resulting mixture is injected into some of the void spaces and chambers 44,46 of the extruded frame 12 of a window or door. The mixture, having been injected into the void spaces, cures at to a solid porous material.

### Example 1

In a particular first example embodiment the first liquid component consists of potassium silicate solution containing, by weight, 1 part (11.25 %) of potassium oxide, 2 parts (22.5%) of silica and 6 parts (66.25%) of water and potassium hydroxide solution prepared by dissolving 9 parts (45%) of potassium hydroxide in 11 parts (55%) of water. These two solutions are mixed in a ratio of 15:8. Alternatively a similar composition may be formed by mixing by weight 8 parts of potassium hydroxide, 5 part silica and 21 part water. The second, solid, component of the mixture is composed of 16 parts (51.3%) by weight of kaolin that has been calcined at a temperature of 750 centigrade to produce metakaolin with particle size 95% below 10 microns and 17 parts (48.7%) of muscovite mica that has a particle size of 100 microns or under with at least 75% less than 80 microns. The chemical composition of the metakaolin is typically silica 11 parts (55%) alumina 8 parts (39%) by weight with trace quantities of iron, titanium, sodium, magnesium and calcium oxides.

When required for use to produce the foam 62, the two components are mixed with a ratio of 1:1 to produce a paste at a temperature between 20 and 30 degrees Celsius. To the paste is added the 100 vol hydrogen peroxide solution as a blowing agent in a ratio of 46:1 which has to be very thoroughly mixed into the paste. The resultant foam formed is then cured at room temperature and conditions and produces a cured foam having a dry density of between approximately 0.38 Kg/L to 0.43 Kg/L

It has in particular been found that these materials can be used as soon as they are mixed and do not require a maturation period as is the case with some other geopolymer materials. In addition it has been found that they can be cured at room temperatures.

In a test a uPVC window 10 filled with foamed such a geopolymer material in accordance with the invention survived exposure to 600°C for up to 55 minutes with a temperature behind the window frame of only 22°C.

### Example 2

A second example embodiment utilises an alternative geopolymer material 62 based on sodium. Advantageously this is cheaper but is more viscous. This particular example comprises an alternative first component and liquid mix comprising a silicate solution formed from 6 parts sodium hydroxide, 5 parts silica and 21 parts water. The silicate solutions may more preferably be formed from a sodium silicate solution comprising 1 part of sodium silicate and 2 parts of water mixed with a sodium hydroxide solution comprising 11 parts of water to 6 parts of sodium hydroxide mixed together in a ratio of 2 to 1 by weight. Alternatively mixture of compounds such as sodium hydroxide solution, sodium silicate solution or sodium oxide could be used to produce a resulting solution with the same chemical composition The second solid mix component comprising the aluminosilicate metakaolin is the same as described in Example 1 and the two components are mixed in the same amounts.

### Example 3

A third example embodiment utilises an alternative geopolymer material 62 using a graphite based solid mix. This is advantageously less dense than those based solely on mica, but is more expensive. This particular example comprises an alternative second component and solid mix comprising 21 parts by weight metakaolin as in Example 1 and 2, but with 5 parts of powdered graphite, and 5 parts of muscovite mica. The first liquid component is the same as that in Example 1 or 2, and the two components are mixed in the same amounts.

While the invention has been described in relation to extruded uPVC frame sections it can also be applied to frame sections made from other plastic materials, or even to extruded aluminium sections. The sections may also be formed other than by extrusion.

Furthermore while described in relation to a window frame it will be appreciated that the invention can equally apply to other frame structures, for example door frames or conservatory frames which are of a similar construction. In addition it could also be applied to actual doors in which the internal panel structure of the door is formed from a outer hollow plastic shell structure which could then be filled with a geopolymer material to provide additional strength and thermal insulation, and fire proofing. Alternatively the door could have a geopolymer filled frame supporting panel elements of the door. The material and preferred compositions described above may also be applicable more generally in building and construction fields and/or more widely.

## Claims

1. A building element structure (10) comprising a hollow shell formed from a first material defining at least one internal chamber (44,46,48,50,52) filled with a geopolymer material;
wherein the geopolymer material is a curable mixture formed from a mixture of aluminosilicate metakaolin, mixed with mica and/or other lamellar material, and an aqueous alkali metal silicate solution comprising an alkali metal hydroxide solution, the curable mixture comprising by weight as compared to 3 parts by weight of the aluminosilicate metakaolin the following ratios of constituents:
from at least 1 up to 5 parts of mica and/or other lamellar material;
from 0 up to 4 parts of an alkali metal silicate, which is potassium and/or sodium silicate;
from at least 0.2 up to 3 parts of an alkali metal hydroxide, which is potassium and/or sodium hydroxide; and
from at least 1 up to 6 parts of water.

2. The building element structure of claim 1, wherein the mixture comprises by weight as compared to 3 parts of aluminosilicate metakaolin the following ratios of constituents:
from at least 2.5 up to 3.5 parts of mica;
from at least 1 up to 2 parts of potassium silicate;
from at least 0.5 up to 1.5 parts of potassium hydroxide; and
from at least 4 up to 5 parts of water.

3. The building element structure of claim 1, wherein the mixture comprises by weight as compared to 3 parts of aluminosilicate metakaolin the following ratios of constituents:
from at least 2.5 up to 3.5 parts of mica;
from at least 0.5 up to 1.5 parts of sodium silicate;
from at least 0.5 up to 1.5 parts of sodium hydroxide; and
from at least 4 up to 5 parts of water.

4. The building structure according to any one of claims 1 to 3, wherein the geopolymer material is a foam material.

5. The building element structure according to claim 4, wherein the geopolymer material is a foam material formed by adding a blowing agent to the curable mixture prior to filling the at least one chamber (44,46,48,50,52).

6. The building element structure according to claim 5, wherein the blowing agent comprises hydrogen peroxide, and preferably from 0.1 to 0.6 parts of 100Vol hydrogen peroxide which is added and blended with 8 parts of the mixture prior to filling the at least one chamber (44,46,48,50,52).

7. The building element structure according to any one of claims 1 to 6, wherein the first material is a polymer, the structure comprises a plurality of chambers, and wherein only some of the chambers (44,46,48,50,52) are filled with the geopolymer material.

8. The building element structure according to claim 7, wherein the first material is uPVC.

9. The building element structure according to any one of claims 1 to 8, wherein the at least one internal chamber (44,46,48,50,52) filled with the geopolymer material extends substantially around the structure.

10. The building element structure according to any one of claims 1 to 9, comprising a window or door frame.

11. A curable geopolymer material for use in a building element, the material formed from a curable mixture of aluminosilicate metakaolin, mixed with mica and/or other lamellar material, and an aqueous alkali metal silicate solution comprising an alkali metal hydroxide solution, the curable mixture comprising by weight as compared to 3 parts by weight of the aluminosilicate metakaolin the following ratios of constituents:
from at least 1 up to 5 parts of mica and/or other lamellar material;
from 0 up to 4 parts of an alkali metal silicate, which is potassium and/or sodium silicate;
from at least 0.2 up to 3 parts of an alkali metal hydroxide, which is potassium and/or sodium hydroxide; and
from at least 1 up to 6 parts of water;
which are mixed together and then cured.

12. The curable geopolymer material according to claim 11, wherein the geopolymer material is a foam material.

13. The curable geopolymer material according to claim 12, wherein the foam material is formed by adding a blowing agent to the curable mixture.

14. The curable geopolymer material according to claim 13, wherein the blowing agent comprises hydrogen peroxide, and preferably from 0.1 to 0.6 parts of 100Vol hydrogen peroxide which is added and blended with 8 parts of the mixture.

15. A method of forming a building element (10) comprising:
providing a hollow shell formed from a first material defining at least one internal chamber (44,46,48,50,52);
filling the at least one internal chamber (44,46,48,50,52) with a geopolymer material comprising a curable mixture of aluminosilicate metakaolin, mixed with mica or other lamellar material, and an aqueous alkali metal silicate solution comprising an alkali metal hydroxide solution, the curable mixture comprising by weight as compared to 3 parts by weight of the aluminosilicate metakaolin the following ratios of constituents:
from at least 1 up to 5 parts of mica and/or other lamellar material;
from 0 up to 4 parts of an alkali metal silicate, which is potassium and/or sodium silicate;
from at least 0.2 up to 3 parts of an alkali metal hydroxide, which is potassium and/or sodium hydroxide; and
from at least 1 up to 6 of water; and
curing the geopolymer material within the at least one chamber (44,46,48,50,52).

## Patentansprüche

1. Bauelementstruktur (10), die ein hohles Gehäuse umfasst, das aus einem ersten Material gebildet ist, das wenigstens eine Innenkammer (44, 46, 48, 50, 52) definiert, die mit einem Geopolymermaterial gefüllt ist;
wobei das Geopolymermaterial eine härtbare Mischung ist, gebildet von einer Mischung aus Aluminosilikatmetakaolin, gemischt mit Glimmer und/oder einem anderen lamellaren Material, und einer wässrigen Alkalimetallsilikatlösung, die eine Alkalimetallhydroxidlösung umfasst, wobei die härtbare Mischung nach Gewicht im Vergleich zu 3 Gewichtsteilen des Aluminosilikatmetakaolins die folgenden Bestandteilverhältnisse aufweist:
von wenigstens 1 bis zu 5 Teilen Glimmer und/oder anderes lamellares Material;
von 0 bis zu 4 Teilen eines Alkalimetallsilikats, das Kalium- und/oder Natriumsilikat ist;
von wenigstens 0,2 bis zu 3 Teilen eines Alkalimetallhydroxids, das Kalium- und/oder Natriumhydroxid ist; und
von wenigstens 1 bis zu 6 Teilen Wasser.

2. Bauelementstruktur nach Anspruch 1, wobei die Mischung nach Gewicht im Vergleich zu 3 Teilen Aluminosilikatmetakaolin die folgenden Bestandteilverhältnisse aufweist:
von wenigstens 2,5 bis zu 3,5 Teilen Glimmer;
von wenigstens 1 bis zu 2 Teilen Kaliumsilikat;
von wenigstens 0,5 bis zu 1,5 Teilen Kaliumhydroxid; und
von wenigstens 4 bis zu 5 Teilen Wasser.

3. Bauelementstruktur nach Anspruch 1, wobei die Mischung nach Gewicht im Vergleich zu 3 Teilen Aluminosilikatmetakaolin die folgenden Bestandteilverhältnisse aufweist:
von wenigstens 2,5 bis zu 3,5 Teilen Glimmer;
von wenigstens 0,5 bis zu 1,5 Teilen Natriumsilikat;
von wenigstens 0,5 bis zu 1,5 Teilen Natriumhydroxid; und
von wenigstens 4 bis zu 5 Teilen Wasser.

4. Bauelementstruktur nach einem der Ansprüche 1 bis 3, wobei das Geopolymermaterial ein Schaumstoffmaterial ist.

5. Bauelementstruktur nach Anspruch 4, wobei das Geopolymermaterial ein Schaumstoffmaterial ist, das durch Zugeben eines Blasmittels zu der härtbaren Mischung vor dem Füllen der wenigstens einen Kammer (44, 46, 48, 50, 52) gebildet ist.

6. Bauelementstruktur nach Anspruch 5, wobei das Blasmittel Wasserstoffperoxid und vorzugsweise 0,1 bis 0,6 Teile von 100 Vol Wasserstoffperoxid beinhaltet, das vor dem Füllen der wenigstens einen Kammer (44, 46, 48, 50, 52) zugegeben und mit 8 Teilen der Mischung gemischt wird.

7. Bauelementstruktur nach einem der Ansprüche 1 bis 6, wobei das erste Material ein Polymer ist, die Struktur mehrere Kammern umfasst und nur einige der Kammern (44, 46, 48, 50, 52) mit dem Geopolymermaterial gefüllt sind.

8. Bauelementstruktur nach Anspruch 7, wobei das erste Material uPVC ist.

9. Bauelementstruktur nach einem der Ansprüche 1 bis 8, wobei die wenigstens eine mit dem Geopolymermaterial gefüllte Innenkammer (44, 46, 48, 50, 52) im Wesentlichen um die Struktur herum verläuft.

10. Bauelementstruktur nach einem der Ansprüche 1 bis 9, die einen Fenster- oder Türrahmen umfasst.

11. Härtbares Geopolymermaterial zur Verwendung in einem Bauelement, wobei das Material aus einer härtbaren Mischung aus Aluminosilikatmetakaolin, gemischt mit Glimmer und/oder einem anderen lamellaren Material, und einer wässrigen Alkalimetallsilikatlösung gebildet ist, die eine Alkalimetallhydroxidlösung umfasst, wobei die härtbare Mischung nach Gewicht im Vergleich zu 3 Gewichtsteilen des Aluminosilikatmetakaolins die folgenden Bestandteilverhältnisse aufweist:
von wenigstens 1 bis zu 5 Teilen Glimmer und/oder anderes lamellares Material;
von 0 bis zu 4 Teilen eines Alkalimetallsilikats, das Kalium- und/oder Natriumsilikat ist;
von wenigstens 0,2 bis zu 3 Teilen eines Alkalimetallhydroxids, das Kalium- und/oder Natriumhydroxid ist; und
von wenigstens 1 bis zu 6 Teilen Wasser;
die miteinander gemischt und dann gehärtet werden.

12. Härtbares Geopolymermaterial nach Anspruch 11, wobei das Geopolymermaterial ein Schaumstoffmaterial ist.

13. Härtbares Geopolymermaterial nach Anspruch 12, wobei das Schaumstoffmaterial durch Zugeben eines Blasmittels zu der härtbaren Mischung gebildet wird.

14. Härtbares Geopolymermaterial nach Anspruch 13, wobei das Blasmittel Wasserstoffperoxid und vorzugsweise 0,1 bis 0,6 Teile von 100 Vol Wasserstoffperoxid beinhaltet, das zugegeben und mit 8 Teilen der Mischung vermischt wird.

15. Verfahren zum Bilden eines Bauelements (10), das Folgendes beinhaltet:
Bereitstellen eines hohlen Gehäuses, das aus einem ersten Material gebildet ist, das wenigstens eine Innenkammer (44, 46, 48, 50, 52) definiert;
Füllen der wenigstens einen Innenkammer (44, 46, 48, 50, 52) mit einem Geopolymermaterial, das eine härtbare Mischung aus Aluminosilikatmetakaolin, gemischt mit Glimmer oder einem anderen lamellaren Material, und einer wässrigen Alkalimetallsilikatlösung beinhaltet, die eine Alkalimetallhydroxidlösung beinhaltet, wobei die härtbare Mischung nach Gewicht im Vergleich zu 3 Gewichtsteilen des Aluminosilikatmetakaolins die folgenden Bestandteilverhältnisse aufweist:
von wenigstens 1 bis zu 5 Teilen Glimmer und/oder anderes lamellares Material;
von 0 bis zu 4 Teilen eines Alkalimetallsilikats, das Kalium- und/oder Natriumsilikat ist;
von wenigstens 0,2 bis zu 3 Teilen eines Alkalimetallhydroxids, das Kalium- und/oder Natriumhydroxid ist; und
von wenigstens 1 bis zu 6 Teilen Wasser; und
Härten des Geopolymermaterials in der wenigstens einen Kammer (44, 46, 48, 50, 52).

## Revendications

1. Structure d'élément de construction (10) comprenant une enveloppe creuse formée à partir d'un premier matériau et définissant au moins une chambre intérieure (44, 46, 48, 50, 52) remplie d'un matériau géopolymère ;
dans laquelle le matériau géopolymère est un mélange polymérisable formé à partir d'un mélange de métakaolin d'aluminosilicate mélangé à du mica et/ou à un autre matériau lamellaire et d'une solution aqueuse de silicate de métal alcalin qui comprend une solution d'hydroxyde de métal alcalin, le mélange polymérisable comprenant, pour 3 parties en poids de métakaolin d'aluminosilicate, les proportions de constituants suivantes, exprimées en poids :
au moins 1 jusqu'à 5 parties de mica et/ou d'un autre matériau lamellaire ;
0 jusqu'à 4 parties d'un silicate de métal alcalin, qui est le silicate de potassium et/ou de sodium ;
au moins 0,2 jusqu'à 3 parties d'un hydroxyde de métal alcalin, qui est l'hydroxyde de potassium et/ou de sodium ; et
au moins 1 jusqu'à 6 parties d'eau.

2. Structure d'élément de construction selon la revendication 1, dans laquelle le mélange comprend, pour 3 parties de métakaolin d'aluminosilicate, les proportions de constituants suivantes, exprimées en poids :
au moins 2,5 jusqu'à 3,5 parties de mica ;
au moins 1 jusqu'à 2 parties de silicate de potassium ;
au moins 0,5 jusqu'à 1,5 parties d'hydroxyde de potassium ; et
au moins 4 jusqu'à 5 parties d'eau.

3. Structure d'élément de construction selon la revendication 1, dans laquelle le mélange comprend, pour 3 parties de métakaolin d'aluminosilicate, les proportions de constituants suivantes, exprimées en poids :
au moins 2,5 jusqu'à 3,5 parties de mica ;
au moins 0,5 jusqu'à 1,5 parties de silicate de sodium ;
au moins 0,5 jusqu'à 1,5 parties d'hydroxyde de sodium ; et
au moins 4 jusqu'à 5 parties d'eau.

4. Structure d'élément de construction selon l'une quelconque des revendications 1 à 3, dans laquelle le matériau géopolymère est un matériau expansé.

5. Structure d'élément de construction selon la revendication 4, dans laquelle le matériau géopolymère est un matériau expansé formé en ajoutant un agent gonflant au mélange polymérisable avant de remplir la ou les chambres (44, 46, 48, 50, 52).

6. Structure d'élément de construction selon la revendication 5, dans laquelle l'agent gonflant comprend du peroxyde d'hydrogène, de préférence 0,1 à 0,6 parties de peroxyde d'hydrogène à 100 % en volume, qui est ajouté et mélangé à 8 parties du mélange avant de remplir la ou les chambres (44, 46, 48, 50, 52).

7. Structure d'élément de construction selon l'une quelconque des revendications 1 à 6, dans laquelle le premier matériau est un polymère, la structure comprend une pluralité de chambres, et seules certaines des chambres (44, 46, 48, 50, 52) sont remplies de matériau géopolymère.

8. Structure d'élément de construction selon la revendication 7, dans laquelle le premier matériau est du polychlorure de vinyle non plastifié (PVC-U).

9. Structure d'élément de construction selon l'une quelconque des revendications 1 à 8, dans laquelle la ou les chambres intérieures (44, 46, 48, 50, 52) remplies de matériau géopolymère s'étendent pratiquement autour de la structure.

10. Structure d'élément de construction selon l'une quelconque des revendications 1 à 9, comprenant un encadrement de fenêtre ou de porte.

11. Matériau géopolymère polymérisable destiné à être utilisé dans un élément de construction, ledit matériau étant formé à partir d'un mélange de métakaolin d'aluminosilicate polymérisable mélangé à du mica et/ou à un autre matériau lamellaire et d'une solution aqueuse de silicate de métal alcalin qui comprend une solution d'hydroxyde de métal alcalin, le mélange polymérisable comprenant, pour 3 parties en poids de métakaolin d'aluminosilicate, les proportions de constituants suivantes, exprimées en poids :
au moins 1 jusqu'à 5 parties de mica et/ou d'un autre matériau lamellaire ;
0 jusqu'à 4 parties d'un silicate de métal alcalin, qui est le silicate de potassium et/ou de sodium ;
au moins 0,2 jusqu'à 3 parties d'un hydroxyde de métal alcalin, qui est l'hydroxyde de potassium et/ou de sodium ; et
au moins 1 jusqu'à 6 parties d'eau ;
qui sont mélangés les uns avec les autres puis polymérisés.

12. Matériau géopolymère polymérisable selon la revendication 11, dans lequel le matériau géopolymère est un matériau expansé.

13. Matériau géopolymère polymérisable selon la revendication 12, dans lequel le matériau expansé est formé en ajoutant un agent gonflant au mélange polymérisable.

14. Matériau géopolymère polymérisable selon la revendication 13, dans lequel l'agent gonflant comprend du peroxyde d'hydrogène, de préférence 0,1 à 0,6 parties de peroxyde d'hydrogène à 100 % en volume, qui est ajouté et mélangé à 8 parties du mélange.

15. Procédé de formation d'un élément de construction (10), comprenant les étapes consistant à :
préparer une enveloppe creuse formée à partir d'un premier matériau et définissant au moins une chambre intérieure (44, 46, 48, 50, 52) ;
remplir la ou les chambres intérieures (44, 46, 48, 50, 52) avec un matériau géopolymère comprenant un mélange de métakaolin d'aluminosilicate polymérisable, mélangé à du mica ou à un autre matériau lamellaire, et une solution aqueuse de silicate de métal alcalin qui comprend une solution d'hydroxyde de métal alcalin, le mélange polymérisable comprenant, pour 3 parties en poids de métakaolin d'aluminosilicate, les proportions de constituants suivantes, exprimées en poids :
au moins 1 jusqu'à 5 parties de mica et/ou d'un autre matériau lamellaire ;
0 jusqu'à 4 parties d'un silicate de métal alcalin, qui est le silicate de potassium et/ou de sodium ;
au moins 0,2 jusqu'à 3 parties d'un hydroxyde de métal alcalin, qui est l'hydroxyde de potassium et/ou de sodium ; et
au moins 1 jusqu'à 6 parties d'eau ; et
polymériser le matériau géopolymère à l'intérieur de la ou des chambres (44, 46, 48, 50, 52).
